Europäisches Patentamt

European Patent Office

Office européen des brevets

(19)

(11) Numéro de publication: **0 204 636**
**B1**

(12) **FASCICULE DE BREVET EUROPEEN**

(45) Date de publication du fascicule du brevet:
13.09.89

(21) Numéro de dépôt: **86401189.5**

(22) Date de dépôt: **03.06.86**

(51) Int. Cl.⁴: **H01G 1/14**, H01G 13/00

(54) Condensateur à fort courant, et procédé de réalisation d'un tel condensateur.

(30) Priorité: **06.06.85 FR 8508537**

(43) Date de publication de la demande:
**10.12.86 Bulletin 86/50**

(45) Mention de la délivrance du brevet:
**13.09.89 Bulletin 89/37**

(84) Etats contractants désignés:
**DE FR GB IT**

(56) Documents cités:
**DE-C- 936 347**
**FR-A- 1 439 236**
**FR-A- 2 251 897**

(73) Titulaire: **L.C.C.-C.I.C.E. - COMPAGNIE EUROPEENNE DE COMPOSANTS ELECTRONIQUES, 50, rue Jean-Pierre Timbaud B.P. 301, F-92402 Courbevole(FR)**

(72) Inventeur: **Mouries, Gerard, THOMSON-CSF SCPI 19, avenue de Messine, F-75008 Paris(FR)**

(74) Mandataire: **Ruellan-Lemonnier, Brigitte et al, THOMSON-CSF SCPI, F-92045 PARIS LA DEFENSE CEDEX 67(FR)**

ACTORUM AG

## Description

La présente invention concerne les condensateurs à fort courant, plus particulièrement les condensateurs à fort courant de type bobiné ainsi qu'un procédé de réalisation de tels condensateurs.

Ces condensateurs sont en général réalisés par bobinage d'au moins deux films diélectriques métallisés qui, dans le cas des forts courants, sont de faible largeur et bobinés à un diamètre important vis-à-vis de leur largeur. Ces condensateurs comportent des connexions électriques réalisées de manière connue par shoopage des bords latéraux des films ainsi qu'une borne de connexion pour réaliser la connexion du shoopage avec un circuit électrique extérieur. Les condensateurs à fort courant de type bobiné actuellement disponibles sur le marché présentent une inductance série de l'ordre de 50 à 100 nH. Or, dernièrement, il est apparu une demande pour des condensateurs de type bobiné à fort courant, mais à très faible inductance série. De tels condensateurs sont utilisés notamment comme condensateurs de protecton pour les nouveaux thyristors à extinction par la gâchette, connus sous la dénomination GTO. En effet, ces thyristors nécessitent des condensateurs de protection ayant une très faible inductance série de l'ordre de quelques nH et capables de supporter des courants crête de l'ordre de 1000 A.

En conséquence, la présente invention a pour but de fournir un condensateur à fort courant qui présente une inductance série très faible.

La présente invention a donc pour object un condensateur à fort courant du type réalisé par bobinage d'au moins deux films diélectriques métallisés et comportant des connexions électriques réalisées par shoopage des bords latéraux des films ainsi qu'une borne de connexion électrique pour la connexion de chaque shoopage avec un circuit extérieur, caractérisé en ce que chaque borne de connexion est réalisée par un élément en chapeau en un matériau conducteur recouvrant le shoopage et par un moyen réalisant un contact électrique entre le shoopage et ledit élément en chapeau.

Selon un mode de réalisation préférentiel, le moyen réalisant le contact électrique entre le shoopage et l'élément en chapeau est constitué par un élément métallique muni de chaque côté de parties en saillie. De préférence, cet élément métallique est constitué par une rondelle en métal déployé. Toutefois, d'autres types d'éléments métalliques peuvent être utilisés, notamment une rondelle en métal martelé. D'autre part, l'élément métallique est de préférence réalisé en un alliage élastique de cuivre tel que du laiton qui peut être étamé pour en assurer la protection.

Selon une autre caractéristique de la présente invention, l'élément en chapeau est de préférence réalisé en aluminium. Pour les condensateurs bobinés, il peut être obtenu à partir d'un fond de tube.

Selon encore une autre caractéristique de la présente invention, le condensateur est enrobé dans une résine dure de type époxy ou toute autre résine thermodurcissable. Cette résine assure en particulier la liaison mécanique et la protection climatique de l'ensemble.

La présente invention concerne aussi un procédé de réalisation d'un condensateur tel que décrit ci-dessus. Conformément à ce procédé, on réalise tout d'abord le bobinage de manière connue d'au moins deux films diélectriques métallisés, puis le shoopage des bords latéraux des films, le positionnement, sur chaque shoopage d'un moyen réalisant un contact électrique, le recouvrement de chaque shoopage et moyen réalisant le contact électrique par un élément en chapeau, l'application d'une pression de serrage pour solidariser les différents éléments, et l'enrobage dans une résine dure.

On obtient ainsi un condensateur très plat dont la plage de connexion est constituée par toute la surface extérieure de l'élément en chapeau. Le montage de ce condensateur est similaire à celui des semiconducteurs, ce qui permet de le monter sur le même radiateur. Ainsi, les self parasites dues aux connexions sont rendues minimum et les pertes résistives dues à la connectique sont pratiquement nulles.

D'autres caractéristiques et avantages de la présente invention apparaîtront à la lecture de la description d'un mode de réalisation faite avec référence aux dessins ci-annexés dans lesquels :

- la figure 1 représente une vue en coupe longitudinale d'un condensateur conforme à la présente invention,
- la figure 2 représente une vue en plan de dessus d'une rondelle en métal déployé utilisée dans la présente invention,
- la figure 3 est une vue en coupe de la rondelle de la figure 2 déposée sur le shoopage, et
- les figures 4 et 5 sont différentes vues de profil de films pouvant être utilisés dans le cadre de la présente invention.

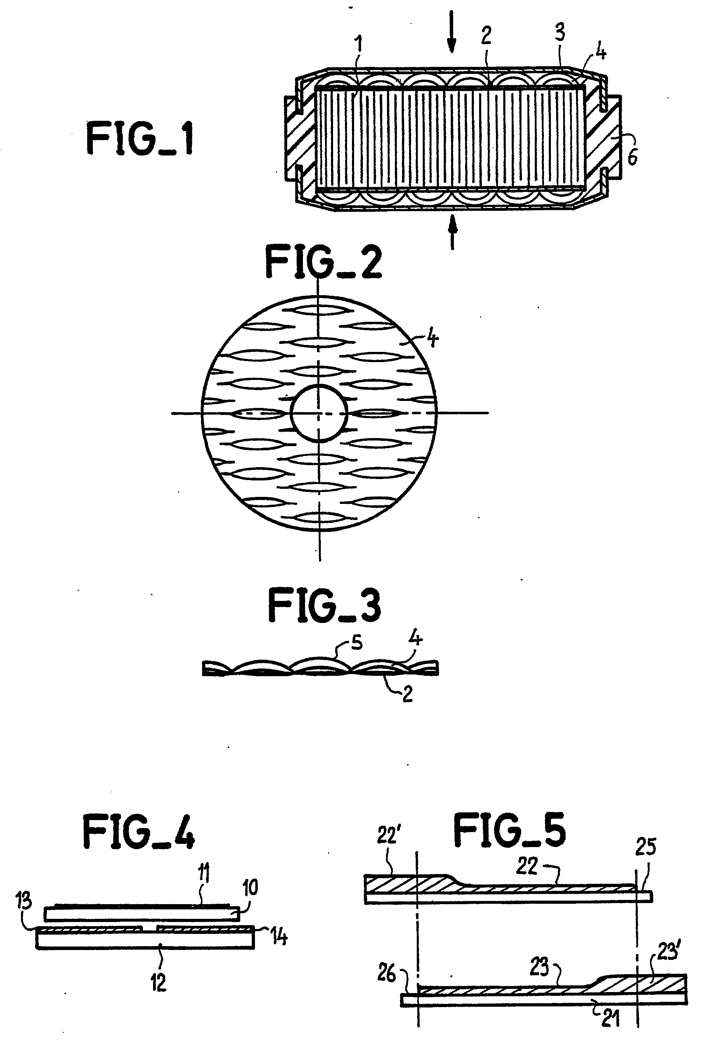

Comme représenté sur la figure 1, le condensateur à fort courant conforme à la présente invention est constitué de films métallisés 1 de faible largeur, bobinés à un diamètre important vis-à-vis de leur largeur. Différents types de films métallisés peuvent être utilisés pour obtenir un condensateur à fort courant. Comme représenté sur la figure 4, la bobine peut être réalisée en utilisant un ruban diélectrique 10 recouvert d'une métallisation centrale 11 alterné avec un ruban diélectrique 12 recouvert de deux métallisations latérales 13 et 14. La métallisation 11 présente de préférence une résistivité élevée pour améliorer l'autocicatrisation tandis que les métallisations latérales 13 et 14 présentent une résistivité faible pour améliorer le passage du courant. De tels films sont utilisés en général pour obtenir des condensateurs à fort courant et à tension supérieure à 1000 volts. Pour les tensions inférieures à 1000 volts, on peut utiliser des films métallisés à bords renforcés comme représenté sur la figure 5. Dans ce cas, chaque film est formé respectivement d'un ruban diélectrique 20, 21 recouvert de métallisations 22, 23 dont les bords opposés 22', 23' sont renforcés pour obtenir une zone à faible résistivité qui permet un contact de bonne qualité avec le shoopage. De manière avantageuse, ces films présentent des marges 25, 26 et sont bobinés en étant décalés l'un par rapport à l'autre comme représenté sur la figure 5. Toutefois, les types de films décrits ci-dessus ne sont pas limitatifs. On peut utiliser tous types de films permettant d'obtenir des condensateurs à fort courant.

Quel que soit le type de films utilisé, les bords latéraux des films sont pourvus, de manière connue, de shoopage 2. Conformément à la présente invention, des bornes de connexion électrique sont réalisées sur chaque shoopage. Ces bornes de connexion électrique sont constituées essentiellement par un élément en chapeau 3. Cet élément en chapeau peut être réalisé à partir d'un fond de tube cylindrique en aluminium, par exemple, dont le diamètre est supérieur au diamètre de la bobine comme représenté sur la figure 1. D'autre part, on interpose entre le shoopage 2 et l'élément en chapeau 3 un moyen réalisant le contact électrique entre le shoopage et l'élément en chapeau. Ce moyen est constitué dans le mode de réalisation représenté par une rondelle 4 en métal déployé du type représenté sur les figures 2 et 3. Cette rondelle est réalisée en un matériau conducteur de préférence élastique, à savoir un alliage élastique de cuivre tel que du laiton. Ce laiton pourra être étamé pour assurer la protection de l'alliage. Comme on le voit clairement sur la figure 3, la rondelle 4 présente des parties en saillie 5 qui sont de préférence positionnées du côté de l'élément en chapeau 3.

La fabrication du condensateur de la figure 1 est réalisée en positionnant les rondelles 4 sur chaque shoopage, puis en enfermant l'ensemble dans les éléments en chapeau 3 et en appliquant sur les deux faces extérieures des éléments 3 une pression de serrage qui peut être compris entre 0,05 à 1 Kg/cm² et qui est choisie de préférence pour être de 0,2 Kg/cm². L'ensemble est alors enrobé dans une résine 6 thermodurcissable. Cette résine peut être une résine époxy. Cette résine assure la solidité mécanique et la protection climatique du condensateur.

Le condensateur conforme à la présente invention est donc très plat et présente une plage de connexion importante. Il en résulte que l'inductance série est très faible, le passage du courant aisé et que l'impédance thermique est très réduite puisqu'il n'y a pas de point chaud ponctuel.

Du fait de l'impédance thermique très faible, ce type de condensateur s'adapte très bien au refroidissement par immersion dans le fréon.

A titre d'exemple, on a réalisé conformément à la présente invention un condensateur de 4μF pour une tension crête de 2000 V et un courant efficace de 60 A. Un condensateur de 90 mm de diamètre et de 46 mm d'épaisseur hors tout a été obtenu en bobinant deux films de polypropylène métallisé à bords renforcés de 10μm maxima d'épaisseur. Les bords latéraux des films ont été shoopés par dépôts successifs de couches de zinc, l'épaisseur totale étant comprise entre 0,5 et 0,8 mm.

Conformément à la présente invention, la bobine ainsi obtenue a été recouverte de deux éléments en forme de chapeau 3 en aluminium avec interposition de rondelles en laiton déployé pour assurer le contact électrique entre le shoopage et l'élément en chapeau. L'ensemble a été solidarisé en appliquant une pression de serrage de 0,2 Kg/cm², puis a été enrobé dans une résine thermodurcissable. On a ainsi obtenu un condensateur présentant une inductance série inférieure à 4 nH.

Le mode de réalisation décrit ci-dessus a été donné à titre d'exemple et peut subir de nombreuses modifications sans sortir du cadre de la présente invention. Notamment, la rondelle en métal déployé peut être remplacée par une rondelle en métal martelé ou par une rondelle en un métal élastique présentant des parties en saillie obtenue selon d'autres techniques. De même, l'élément en chapeau peut être réalisé en un autre métal que l'aluminimum ; toutefois, ce métal doit être un bon conducteur thermique et électrique.

## Revendications

1. Condensateur à fort courant du type réalisé par bobinage d'au moins deux films diélectriques métallisés et comportant des connexions électriques réalisées par shoopage (2) des bords latéraux des films ainsi qu'une borne de connexion électrique pour la connexion de chaque shoopage avec un circuit extérieur, caractérisé en ce que chaque borne de connexion est réalisée par un élément en chapeau (3) en un matériau conducteur recouvrant le shoopage et par un moyen (4) réalisant un contact électrique entre le shoopage et ledit élément en chapeau.

2. Condensateur selon la revendication 1, caractérisé en ce que le moyen réalisant le contact électrique entre le shoopage et l'élément en chapeau est constitué par un élément métallique (4) muni de chaque côté de parties (5) en saillie.

3. Condensateur selon la revendication 2, caractérisé en ce que l'élément métallique est une rondelle en métal déployé.

4. Condensateur selon la revendication 2, caractérisé en ce que l'élément métallique est une rondelle en métal martelé.

5. Condensateur selon l'une quelconque des revendications 1 à 4, caractérisé en ce que le moyen réalisant le contact électrique entre le shoopage et l'élément en chapeau est réalisé en un alliage élastique de cuivre tel que du laiton.

6. Condensateur selon la revendication 5, caractérisé en ce que l'alliage est étamé.

7. Condensateur selon l'une quelconque des revendications 1 à 6, caractérisé en ce que l'élément en chapeau (3) est en aluminium.

8. Condensateur selon l'une quelconque des revendications 1 à 7, caractérisé en ce qu'il comporte un enrobage (6) dans une résine dure.

9. Procédé de réalisation d'un condensateur selon l'une quelconque des revendications 1 à 8, caractérisé en ce qu'il comporte les étapes suivantes :
   - bobinage, de manière connue, d'au moins deux films diélectriques métallisés,
   - shoopage des bords latéraux des films,
   - positionnement, sur chaque shoopage, d'un moyen réalisant un contact électrique,

- recouvrement de chaque shoopage et moyen réalisant le contact électrique par un élément en chapeau,
- application d'une pression de serrage pour solidariser les différents éléments, et
- enrobage dans une résine dure.

## Patentansprüche

1. Starkstromkondensator vom Typ eines Wickels von mindestens zwei metallisierten dielektrischen Folien, mit durch Shooping (2) der Seitenränder der Folien erzeugten elektrischen Anschlüssen und mit einem elektrischen Anschlüssen und mit einem elektrischen Anschlußpol zur Verbindung jedes Shoopingsaums mit einem äußeren Stromkreis, dadurch gekennzeichnet, daß jeder Anschlußpol aus einem Kappenelement (3) aus leitendem Material, das den Shoopingsaum überdeckt, und einem Bauteil (4) besteht, das einen elektrischen Kontakt zwischen dem Shoopingsaum und dem Kappenelement herstellt.

2. Kondensator nach Anspruch 1, dadurch gekennzeichnet, daß das Mittel zur Herstellung des elektrischen Kontakts zwischen dem Shoopingsaum und dem Kappenelement aus einem Metallbauteil (4) besteht, das auf jeder Seite Vorsprünge (5) aufweist.

3. Kondensator nach Anspruch 2, dadurch gekennzeichnet, daß das Metallbauteil eine Scheibe aus Streckmetall ist.

4. Kondensator nach Anspruch 2, dadurch gekennzeichnet, daß das Metallbauteil eine Scheibe aus gehämmertem Metall ist.

5. Kondensator nach einem beliebigen der Ansprüche 1 bis 4, dadurch gekennzeichnet, daß das Mittel zur Herstellung des elektrischen Kontakts zwischen dem Shoopingsaum und dem Kappenelement aus einer elastischen Kupferlegierung wie Messing besteht.

6. Kondensator nach Anspruch 5, dadurch gekennzeichnet, daß die Legierung verzinnt ist.

7. Kondensator nach einem der Ansprüche 1 bis 6, dadurch gekennzeichnet, daß das Kappenelement (3) aus Aluminium besteht.

8. Kondensator nach einem der Ansprüche 1 bis 7, dadurch gekennzeichnet, daß er eine Umhüllung (6) aus einem harten Harz aufweist.

9. Verfahren zur Herstellung eines Kondensators nach einem der Ansprüche 1 bis 8, dadurch gekennzeichnet, daß es aus folgenden Stufen besteht:
- Aufwickeln mindestens zweier metallischer dielektrischer Folien in bekannter Weise,
- Shooping der Seitenränder der Folien,
- Anbringen eines Mittels zur Herstellung eines elektrischen Kontakts auf jedem Shoopingsaum,
- Überdecken jedes Shoopingsaums und Mittel zur Herstellung eines elektrischen Kontakts durch ein Kappenelement,
- Anwendung eines Anpreßdrucks zur Verfestigung der verschiedenen Bauteile miteinander, und
- Einhüllen in ein hartes Harz.

## Claims

1. A high current capacitor of the type obtained by winding up at least two metallized dielectric films and comprising electric connections realized by shooping (2) of the lateral rims of the films, and an electric connection terminal for connecting each shooping with an external circuit, characterized in that each connection terminal is constituted of a cap element (3) made of a conducting material and covering the shooping, and of a means (4) providing an electric contact between the shooping and the cap element.

2. A capacitor according to claim 1, characterized in that the means designed to provide the cap element is constituted of a metal element (4) having projections (5) on either side.

3. A capacitor according to claim 2, characterized in that the metal element is a washer of expanded metal.

4. A capacitor according to claim 2, characterized in that the metal element is a washer of hammered metal.

5. A capacitor according to any one of claims 1 to 4, characterized in that the means designed to provide the electric contact between the shopping and the cap element is made of a resilient copper alloy such as brass.

6. A capacitor according to claim 5, characterized in that the alloy is tinned.

7. A capacitor according to any one of claims 1 to 6, characterized in that the cap element (3) is made of aluminium.

8. A capacitor according to any one of claims 1 to 7, characterized in that it comprises an encapsulation (6) made of a hard resin.

9. A process for manufacturing a capacitor according to any one of claims 1 to 8, characterized in that it comprises the following steps:
- winding-up at least two metallized dielectric films in a known manner,
- shooping the lateral rims of the films,
- positioning a means for providing an electric contact on each shooping,
- covering each shooping and providing means for ensuring an electric contact via a cap element,
- applying a clamping pressure in order to solidly secure the different elements onto each other, and
- enclosing in a hard resin.

**FIG_1**

**FIG_2**

**FIG_3**

**FIG_4**

**FIG_5**